# EUROPEAN PATENT APPLICATION

(11) **EP 3 901 783 A1**
(43) Date of publication of application: **27.10.2021**
(21) Application number: 21169275.1
(22) Date of filing: 20.04.2021
(51) Int. Cl.: G06F 16/29, G08B 25/01, H04W 4/02

(54) **SYSTEM, METHOD, AND NON-TRANSITORY COMPUTER READABLE MEDIUM FOR GENERATING INSTRUCTIONS**

(30) Priority: 24.04.2020 JP 2020077774
(71) Applicant: YOKOGAWA ELECTRIC CORPORATION, Musashino-shi Tokyo 180-8750 (JP)
(72) Inventor: PALANIRAJ, Alaguraja Pandian, Musashino-shi, Tokyo 180-8750 (JP); ABE, Koh, Musashino-shi, Tokyo 180-8750 (JP); TANIGUCHI, Koichi, Musashino-shi, Tokyo 180-8750 (JP)
(74) Representative: Scott, Stephen John

(57) **Abstract**

A method, a system, and a non-transitory computer readable medium for generating instructions. An asset database is updated based on data received from a plurality of assets. The asset database stores asset data specifying an assets model, and the assets model specifies one or more asset properties for each asset in the plurality of assets. Upon determining that an alert condition is satisfied based on a sensor property specified by the assets model, an asset in the plurality of assets is selected as a target asset to which an instruction associated with the alert condition is to be sent, based on allocation property specified by the assets model. Upon selecting the target asset, an instruction for the target asset is generate based on the one or more properties for the target asset specified in the assets model.

## Description

### CROSS-REFERENCE TO RELATED APPLICATION

The present application claims priority to and the benefit of Japanese Patent Application No. 2020-077774 filed April 24, 2020, the entire contents of which are incorporated herein by reference.

### TECHNICAL FIELD

The present disclosure relates to a system, a method, and a non-transitory computer readable medium for generating instructions. More particularly, the present disclosure relates to a system, a method, and a non-transitory computer readable medium for generating instructions for delivery to one or more assets.

### BACKGROUND

In order to provide services, monitor systems, and/or make decisions, an enterprise or an organisation may utilise data sourced or received from a plurality of assets. Such assets may include, for example, sensors, servers, user terminals, and third-party data sources. The availability, characteristics, and locations of such assets may change dynamically, and the dynamic nature of these changes may pose challenges with respect to orchestration of the data sourced or received from the plurality of assets. With the emergence of technologies which facilitate the so-called "Internet of Things", and the resulting proliferation of such assets, it is expected that technologies which address these challenges will be required.

### SUMMARY

In consideration of the above challenges, the present disclosure discloses a system, a method, and a non-transitory computer readable medium for generating instructions for delivery to one or more assets.

A first aspect of the present disclosure provides a method for generating an instruction, the method comprising: updating an asset database based on data received from a plurality of assets, the asset database storing asset data specifying an assets model, the assets model specifying one or more asset properties for each asset in the plurality of assets; determining whether an alert condition is satisfied based on a sensor property specified by the assets model; selecting an asset in the plurality of assets as a target asset to which an instruction associated with the alert condition is to be sent, based on a location property specified by the assets model; and generating an instruction for the target asset based on the one or more properties for the target asset specified in the assets model.

A second aspect of the present disclosure provides a system for generating an instruction, the system comprising one or more processors configured to: update an asset database based on data received from a plurality of assets, the asset database storing asset data specifying an assets models, the assets model specifying one or more asset properties for each asset in the plurality of assets; determine whether an alert condition is satisfied based on a sensor property specified by the assets model; select an asset in the plurality of assets as a target asset to which an instruction associated with the alert condition is to be sent, based on a location property specified by the assets model; and generate an instruction for the target asset based on the one or more properties for the target asset specified in the assets model.

A third aspect of the present disclosure provides a non-transitory computer readable medium storing one or more instructions which, when executed by one or more processors, implement a method for generating an instruction, the method comprising: updating an asset database based on data received from a plurality of assets, the asset database storing asset data specifying an assets model, the assets model specifying one or more asset properties for each asset in the plurality of assets; determining whether an alert condition is satisfied based on a sensor property specified by the assets model; selecting an asset in the plurality of assets as a target asset to which an instruction associated with the alert condition is to be sent, based on a location property specified by the assets model; and generating an instruction for the target asset based on the one or more properties for the target asset specified in the assets model.

### BRIEF DESCRIPTION OF THE DRAWINGS

Embodiments of the present disclosure will be described with reference to the accompanying drawings, in which:
FIG. 1 is schematic diagram showing an enterprise which comprises a system in accordance with a first embodiment of the present disclosure;
FIG. 2 is schematic diagram showing the system in accordance with the first embodiment of the present disclosure;
FIG. 3 is a schematic diagram showing an assets model in accordance with the first embodiment of the present disclosure;
FIG. 4 is a flow chart showing a method for generating an instruction in accordance with the first embodiment of the present disclosure;
FIG. 5 is a schematic diagram showing a system in accordance with a second embodiment of the present disclosure; and
FIG. 6 is schematic diagram showing a system in accordance with the first and second embodiments of the present disclosure.

### DETAILED DESCRIPTION

Various embodiments and examples according to the present disclosure will be described with reference to the accompanying drawings. Features which are common to two or more embodiments are indicated in the drawings with the same reference signs for clarity and conciseness.

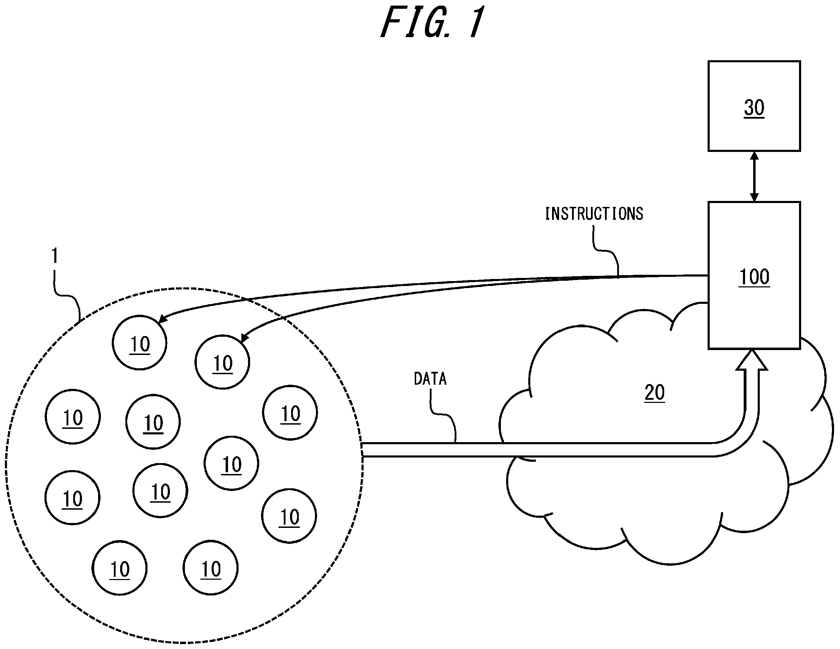

FIG. 1 is schematic diagram showing an enterprise 1, which is associated with a system 100 in accordance with a first embodiment of the present disclosure. The enterprise 1 includes or is associated with a plurality of assets 10 which are communicably coupled to the system 100 via a network 20. The system 100 is managed via a terminal 30, which is communicably coupled to the system 100.

Each asset in the plurality of assets 10 is an electronic device, such as a sensor device, a notification device, or a control device. Each asset in the plurality of assets 10 incorporates or is associated with functionality, such as a communication interface, which facilitates communication with the system 100 via the network 20.

The system 100 receives data from the plurality of assets 10 via the network 20. The system 100, based on the data received from the plurality of assets 10, determines whether one or more alert conditions is or have been satisfied. That is, the system 100 evaluates the one or more alert conditions based on the data received from the plurality of assets 10. Upon determining that the one or alert conditions is or have been satisfied, the system 100 generates one or more instructions for the plurality of assets 10. Such instructions may include notification instructions and/or control instructions.

Examples of sensor devices include temperature sensors, humidity sensors, infrared sensors, cameras, microphones, and the like. Such sensor devices may be standalone devices or may be incorporated into an apparatus, such as an industrial machine or a home appliance. Sensor devices generate sensor data which is sent to the system 100 via the network 20. The sensor data is indicative of one or more sensor readings made by the sensor devices. Here, a sensor reading corresponds to a measurement of a physical quantity or property made by a respective sensor device.

Examples of notification devices include devices which incorporate a display, a speaker, an audio alarm (e.g. a buzzer), a visual alarm (e.g. a light emitting diode), and the like. Such notification devices may be standalone devices or may be incorporated into an apparatus, such as an industrial machine or a home appliance. A notification device may issue a notification to one or more users in its surrounding environment, in the form of text, images, and/or sounds, in response to one or more notification instructions which are received from the system 100 via the network 20. Data specifying the text, images, and/or sounds to be issued by a notification device may be stored locally by the notification device or included in the notification instructions received from the system 100.

Examples of control devices include programmable logic controllers, microcontrollers, and programmable logic relays. Such control devices may be incorporated into an apparatus, such as an industrial machine or a home appliance. Control devices operate in accordance with one or more control instructions which are received from the system 100 via the network 20.

As asset in the plurality of assets 10 may be a combination of a sensor device, a notification device, and/or a control device (hereinafter termed a "hybrid device"). Examples of hybrid devices include cellular telephones, smartphones, personal digital assistants, tablet computers, notebook computers, and wearable computing devices. Such hybrid devices may generate sensor data which is sent to the system 100 via the network 20, provide notifications on the basis of one or more notification instructions which are received from the system 100 via the network 20, and/or perform control in accordance with one or more control instructions which are received from the system 100 via the network 20.

Each asset in the plurality of assets 10 is associated with an asset location. The asset location may be specified in absolute terms (e.g. latitude and longitude) or in relative terms (e.g. with respect to a defined location). An asset may include functionality for determining its absolute location using a geolocation system. For example, an asset may include a receiver compatible with a satellite-based radio navigation system, such as the Global Positioning System, to enable the asset to determine its absolute position. Alternatively, an asset may determine its absolute location based the characteristics of one or more wireless access points (e.g. Wi-Fi™ hotspots), as is known in the art. In other examples, an asset may be pre-programmed with a fixed asset location (i.e. based on a user input) corresponding to a location where the asset is deployed or installed. An asset in the plurality of assets 10 may send its asset location, in the form of location data, to the system 100 via the network 20.

An asset in the plurality of assets 10 may be associated with an asset context. An asset context indicates the context in which the corresponding asset is being used or is deployed. For example, an asset context may indicate a building or room in which the asset is installed or may indicate an apparatus (e.g. industrial machinery or a home appliance) which incorporates the asset. An asset may be pre-programmed with its asset context or may derive its asset context on the basis of one or more external data sources, for example. An asset in the plurality of assets 10 may send its asset context, in the form of context data, to the system 100 via the network 20.

An asset in the plurality of assets 10 may be associated with an asset type. An asset type indicates, for example, whether the corresponding asset is a sensor device, a notification device, a control device, or a hybrid device. The asset type may provide a more detailed or granular indication of asset type by, for example, indicating a particular model of sensor device, a particular model of notification device, a particular model of control device, or a particular model of hybrid device. An asset in the plurality of assets 10 may send its asset type, in the form of type data, to the system 100 via the network 20.

An asset in the plurality of assets 10 may be associated with an asset status. An asset status indicates, for example, whether the corresponding asset will accept instructions, such as notification instructions and/or control instructions, sent by the system 100. An asset may be pre-programmed with an asset status (e.g. based on user input) or may determine its asset status based, for example, on its surrounding environment, the time of day, or an internal state of the corresponding asset. An asset in the plurality of assets 10 may send its asset status, in the form of status data, to the system 100 via the network 20.

The plurality of assets 10 may send data (e.g. sensor data, location data, context data, type data, and/or status data) to the system 100 in accordance with a predetermined schedule or timing, in response to an event, or on an ad-hoc basis. For example, an asset may send sensor data in accordance with a predetermined schedule, or according to a particular frequency (e.g. once per second, once per minute, once per hour or once per day). An asset may send location data in response to a change in the location of the corresponding asset, or upon power-up of the corresponding asset. Similarly, an asset may send context data in response to a change in the context of the corresponding asset, or upon power-up of the corresponding asset. An asset may send status data in response to a change in the status of the corresponding asset, or upon power-up of the corresponding asset. Finally, an asset may send type data upon power-up of the corresponding asset. Data sent to the system 100 by an asset upon power-up may be sent as part of a registration procedure performed by the asset with respect to the system 100.

Typically, the plurality of assets 10 is heterogenous in terms of asset location, asset context, asset type, and asset status. That is, each asset in the plurality of assets 10 may be associated with a different asset location, a different asset context, a different asset type, and a different asset status. Moreover, the asset location, the asset context, and the asset status of a particular asset may change dynamically, in accordance with changes to how and/or where the asset is deployed, or changes to the environment in which the asset is deployed. These dynamic changes may be referred to as dynamic changes in the state of the plurality of assets 10.

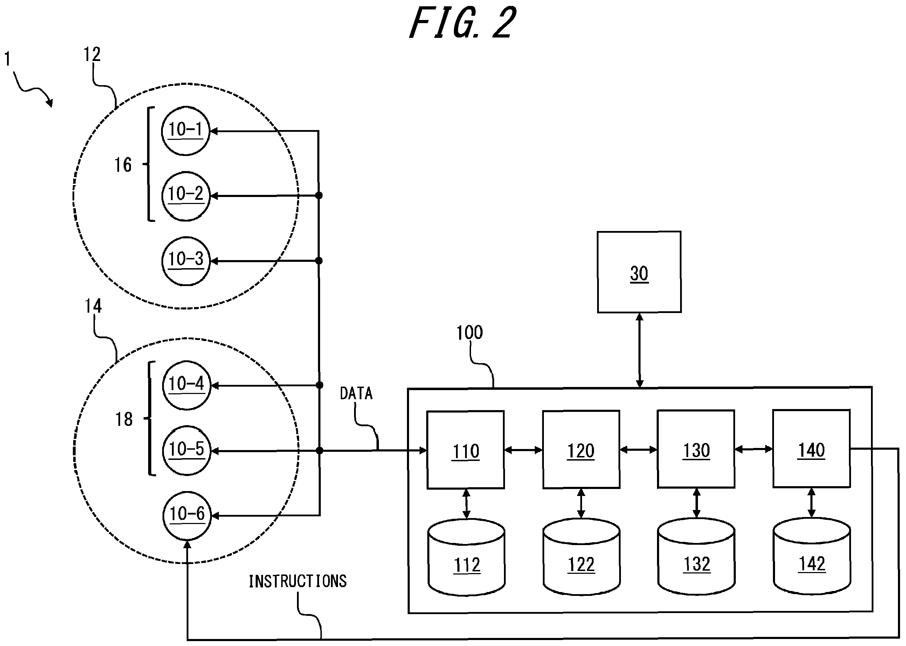

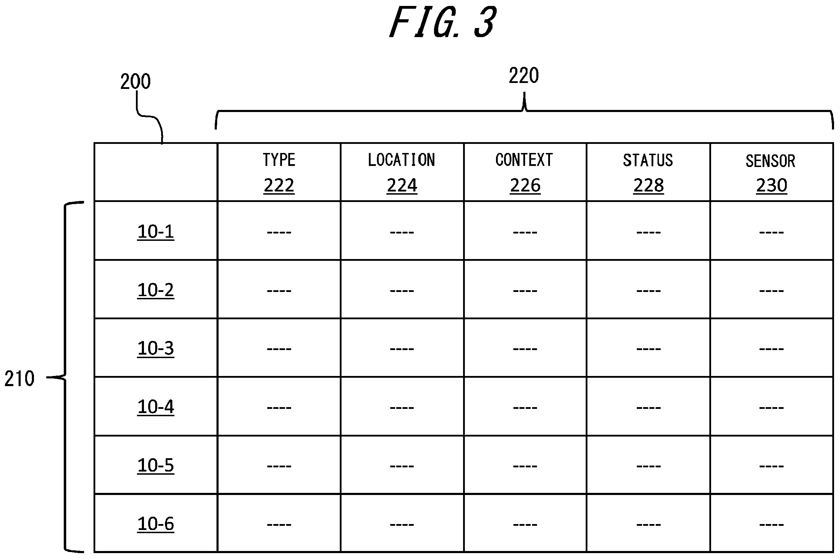

The instructions sent from the system 100 to the plurality of assets 10 must account for the dynamic changes in the state of the plurality of assets 10 discussed above. That is, for a particular alert condition, the one or more assets in the plurality of assets 10 to which the resulting instruction is sent, may change in accordance with dynamic changes in the state of the plurality of assets 10. Moreover, evaluation of the alert condition itself (i.e. determination as to whether the alert condition has been satisfied) may change in accordance with the dynamic changes in the state of the plurality of assets 10. Thus, in order to account for such dynamic changes in the state of the plurality of assets 10, the system 100 is configured to maintain an assets model, which is configured to reflect the current state of the plurality of assets 10. Further details of the system 100 and the assets model are described below with reference to FIG. 2 and FIG. 3.

FIG. 2 is a schematic diagram showing the system 100 according to the present embodiment in more detail. In this embodiment, the system 100 includes a device module 110, an aggregator module 120, an alert module 130, and an instruction module 140, together with a first data store 112, a second data store 122, a third data store 132, and a fourth data store 142.

The device module 110 facilitates registration and management of the plurality of assets 10 with the system 100. That is, each asset in the plurality of assets 10 may, upon power-up, communicate with the device module 110 to register with the system 100. The registration of assets in the plurality of assets 10 may be performed using any suitable registration process known in the art. As part of the registration process, the device module 110 may store registration data for the plurality of assets 10 in the first data store 112. The registration data may include data which enables communication between the plurality of assets 10 and the system 100, such as logical addresses (e.g. an Internet Protocol address).

The device module 110 may also process data received from the plurality of assets 10 (e.g. sensor data, location data, context data, type data and/or status data). The device module 110 may parse the data received from the plurality of assets 10 to convert the data into a standard format used by other modules in the system (e.g. the aggregator module 120, the alert module 130, and/or the instruction module 140).

The aggregator module 120 maintains the assets model based on the data received from the plurality of assets 10. That is, the aggregator module 120 derives the current state of the plurality of assets 10 from the data and updates the assets model, as necessary, to ensure that the assets model reflects the current state of the plurality of assets 10. The assets model may be stored as asset data in the second data store 122, which is associated with the aggregator module 120. For example, the asset data may be structured as an asset database stored in the second data store 122.

The assets model characterises the state of the plurality assets 10 in terms of one or more assets which are currently connected to the system 100 (hereinafter termed "connected assets"). That is, the assets model is a logical data model which describes the one or more connected assets. For example, the assets model may describe the connected assets in terms of one or more asset properties, which are determined based on the data received from the plurality of assets 10.

In the example shown in FIG. 2, the assets model indicates that the enterprise 1 is currently associated with six connected assets 10-1 to 10-6 from the plurality of assets 10. The assets model may further indicate that connected assets 10-1 to 10-3 are associated with a first location 12 and that connected assets 10-4 to 10-6 are associated with a second location 14, different from the first location 12. Here, the first location 12 and the second location 14 may be physical locations or logical locations (e.g. a specific room or building). Further, the assets model may indicate that connected assets 10-1 and 10-2 are associated with a first asset context 16 and that connected assets 10-4 and 10-5 are associated with a second asset context 18, different from the first asset context 16. The assets model may also indicate the type and/or status of each of the connected assets 10-1 to 10-6. Further, in some examples, the assets model may indicate sensor readings from one or more connected assets 10-1 to 10-6 in the assets model.

The aggregator module 120 aggregates the data received from the plurality of assets 10 and parsed by the device module 110 to maintain the assets model. That is, the aggregator model 120 maintains the assets model based on one or more of the sensor data, the notification data, the location data, the context data, the type data and the status data received from the plurality of assets 10. More specifically, the aggregator module 120 updates the assets model in response to changes in asset location, asset context, and/or asset type, derived from the data received from the plurality of assets 10. In this manner, the assets model is updated in response to dynamic changes to connected assets in the plurality of assets 10, and thus provides an up-to-date description of the current state of the plurality of assets 10.

The alert module 130 determines whether one of more alert conditions are satisfied by the current state of the plurality of assets 10. Specifically, the alert module 130 determines whether the one or more alert conditions is satisfied based on the assets model stored in the second data store 122. In this respect, the one or more alert conditions may be defined by data stored in the third data store 132 or may be determined dynamically based on one or more rules. An alert condition may, for example, be associated with a particular context or a particular location in the enterprise 1. Thus, the assets model enables the alert condition to be evaluated based on the current state of the plurality of assets 10 associated with the enterprise 1. An alert condition may, for example, by specified in terms of one or more thresholds for physical quantities or properties associated with a particular context or a particular location in the enterprise 1.

To provide an example, a first alert condition may be associated with the first location 12 in the enterprise 1. In this case, the alert module 130, by reference to the assets model, determines that connected assets 10-1 to 10-3 are currently located at the first location 12, and thus determines whether the first alert condition is satisfied based on the asset properties associated with one or more of connected assets 10-1 to 10-3.

To provide another example, a second alert condition may be associated with the second context 18 in the enterprise 1. In this case, the alert module 130, by reference to the assets model, determines that connected assets 10-4 and 10-5 are associated with the second context 18 and thus determines whether the second alert condition is satisfied based on the asset properties associated with one or both of connected assets 10-4 and 10-5. Further, in this example, the alert module 130 may, by reference to the assets model, determine that the second context 18 is located at the second location 14 and thus determine whether the second alert condition is satisfied based on one or more asset properties associated with connected asset 10-6, which is also located at location 14. In this manner, the assets model maintained by the aggregator module 120 enables the alert module 130 to evaluate the one or more alert conditions based on the current state of the plurality of assets 10 associated with the enterprise 1.

In order to determine whether an alert condition has been satisfied, the alert module 130 may build one or more dynamic rules based on alert context metadata and alert rule metadata stored, for example, in the third data store 132. The dynamic rules are generated so as to reflect the current state of the plurality of assets 10, as defined in the assets model. That is, by reference to the alert context metadata and the alert rule metadata, the alert module 130 generates one or more dynamic rules which account for the plurality of connected asset 10-1 to 10-6, and then proceeds to evaluate the generated dynamic rules based on the asset properties specified in the assets model. In this manner, the dynamic rules may vary in accordance with changes in the state of the plurality of assets 10 (i.e. changes to the plurality of connected assets 10-1 to 10-6).

Upon determining that an alert condition has been satisfied, the alert module 130, generates an alert model for use by the instruction module 140 in generation of one or more instructions. The alert model specifies one or more notification instructions (i.e. one or more instructions to be sent to a notification device) and/or one or more control instructions (i.e. one or more instructions to be sent to a control device) which are to be sent in response to the alert condition being satisfied. The alert model may specify a criticality (i.e. importance) for the one or more notification instructions and/or the one or more control instructions. Further, the alert model may specify an asset context, an asset location, and/or an asset type to which the one or more notification instructions and/or the one or more control instructions are to be sent.

After the alert module 130 has determined that the alert condition has been satisfied and generated the alert model, the instruction module 140 determines one or more connected assets in the plurality of assets 10 to which the associated one or more instructions can be sent (hereinafter termed "instructable assets"), by reference to the assets model stored in the second data store 122. Following this, the instruction module 140 determines one or more assets, from the instructable assets, to which the associated one or more instructions is to be sent (hereinafter termed "target assets"). For example, the instruction module 140 may determine one or more instructable assets and one or more target assets based on the asset properties associated with the connected assets specified in the assets model.

To provide an example, a first alert model may be associated with the first context 16 in the enterprise 1 and specify that a notification instruction is to be sent to a notification device close to the first context 16. In this case, the instruction module 140, by reference to the assets model, may determine that connected asset 10-3 is located at location 12 (i.e. close to the first context 16) and, based on the corresponding asset properties in the assets model, is an instructable asset. Further, if the asset properties for connected asset 10-3 indicate that connected asset 10-3 is a notification device, the instruction module 140 may selected connected asset 10-3 as a target asset to which the notification instruction associated with the first alert model is to be sent. Finally, the instruction module 140 may format the instruction in accordance with the asset properties for connected asset 10-3 and send the notification instruction to the connected asset 10-3 via the network 20.

In some examples, the instruction module 140 may generate an instruction model which specifies one or more target assets to which the one or more instructions are to be sent. When generating the instruction model, the instruction module 140 may perform one or more checks to confirm that the one or more target assets are still instructable assets for the alert condition. Further, when generating the instructions model, the instruction module 140 may perform one or more checks to confirm that the one or more target assets have not changed location since it was determined that the alert condition was satisfied. These checks may be performed with reference to the assets model or by communicating directly with the target assets specified in the instructions model. In this manner, the instructions module 140 is able to confirm that the target assets defined in the instruction model are still "valid" assets for the instructions associated with the alert condition. After these checks have been performed, the instruction module 140 may send the one or more instructions to the one or more target assets defined in the instructions model.

In some examples, the instructions sent by the instructions module 140 may be sent in a "cascading" manner. That is, in a case in which the instruction model specifies a plurality of target assets, the instructions module 140 may send the associated one or more instructions to a first target asset in the plurality of target assets and wait for an acknowledgement that the one or more instructions have been received and/or executed by the first target asset. If no such acknowledgment is received (e.g. within a predetermined time period), the instruction module 150 may proceed to send the one or more instructions to a second target asset in the plurality of target assets and await an acknowledgement that the one or more instructions have been received and/or executed by the second target asset. This procedure may be repeated until an acknowledgement is received by the instruction module 150, or no further target assets are specified in the instructions model.

FIG. 3 is a schematic diagram showing an example of an assets model 200 for use in the system 100 discussed above with reference to FIG. 1 and FIG. 2. The assets model 200 is a data structure, or a collection of data structures, which comprises asset data specifying one or more connected assets 210 in the plurality of assets 10 associated with the enterprise 1, together with one or more asset properties 220 associated with the one or more connected assets 210. The assets model 200 shown in FIG. 3 includes connected assets 10-1 to 10-6 as shown in FIG. 2. The asset properties 220 in the assets model 200 include a type property 222, a location property 224, a context property 226, a status property 228, and a sensor property 230.

The type property 222, the location property 224, the context property 226, and the status property 228 respectively correspond to the asset type, asset location, asset context and asset status for the corresponding connected asset 210. Thus, the type property 222, the location property 224, the context property 226, and the status property 228 for the connected assets 210 may be determined and maintained based respectively on the type data, the location data, the context data and the status data received from the plurality of connected assets 10-1 to 10-6. Further, the sensor property 230 indicates one or more sensor readings for sensor devices in the plurality of connected assets 210 and may be determined based on the sensor data received from the plurality of connected assets 10-1 to 10-6.

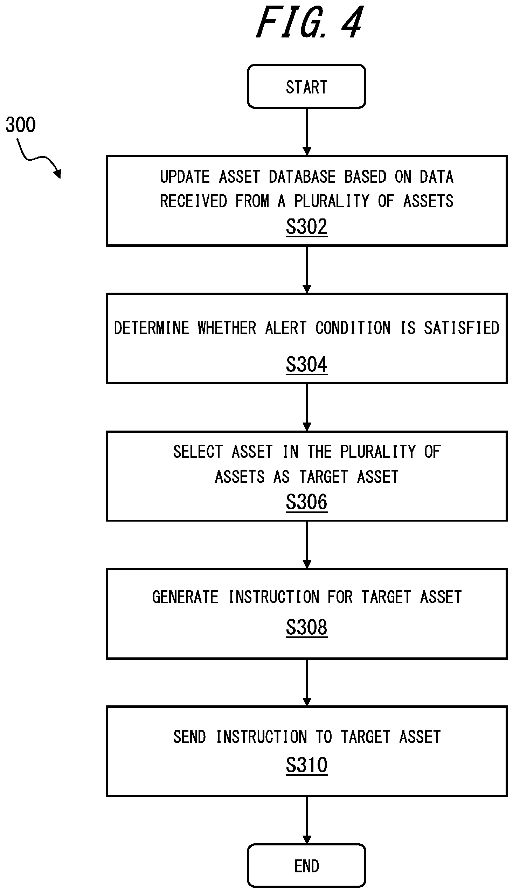

FIG. 4 is a flow chart showing a method 300 for generating an instruction in accordance with the first embodiment of the present disclosure. The method 30 may be performed, for example, by the system 100 of the first embodiment, as described above with reference to FIG. 1, FIG. 2, and FIG. 3.

First, the asset database is updated based on the data received from the plurality of assets 10 (step S302). As discussed above, the asset database stores asset data which specifies the assets model, which in turn specifies one or more asset properties for each asset in the plurality of assets 10. In particular, the assets model may specify one of more asset properties for each of the connected assets 10-1 to 10-6, as shown in FIG. 2.

Next, it is determined whether an alert condition is satisfied, based on the assets model (step S304). For example, determination as to whether the alert condition is satisfied may be based on a sensor property specified by the assets model. As discussed above, in some examples, determining whether the alert condition is satisfied may involve building one or more dynamic rules based on alert context metadata and alert rule metadata. The dynamic rules are generated so as to reflect the current state of the plurality of assets 10, as defined in the assets model. That is, by reference to the alert context metadata and the alert rule metadata, one or more dynamic rules which account for the plurality of connected asset 10-1 to 10-6 can be generated. Once generated, the dynamic rules may be evaluated based on the asset properties specified in the assets model. In this manner, the dynamic rules may vary in accordance with changes in the state of the plurality of assets 10 (i.e. changes to the plurality of connected assets 10-1 to 10-6). Upon determination that the alert condition is satisfied, an alerts model may be generated in the manner discussed above with reference to FIG. 2.

Next, an asset in the plurality of assets 10 is selected as a target asset to which one or more instructions associated with the alert condition are to be sent, based on the assets model (step S306). For example, selection of the target asset to which the one or more instructions associated with the alert condition are to be sent may be based on a location property specified by the assets model. Selection of the target asset may also be based on the alerts model, as described above with reference to FIG. 2. As discussed above with reference to FIG. 2, an instructions model which specifies the selected target asset may be generated for subsequent use in sending the instructions to the target assets.

Selecting the asset in the plurality of assets 10 as the target asset may include determining one or more instructable assets in the plurality of assets 10 based on the assets model. The target asset may be selected from the one or more instructable assets based on the one or more asset properties for each of the one or more instructable assets. In some cases, the one or more instructable assets in the plurality of assets 10 may be determined based on the status property. In in some cases, the one or more instructable assets in the plurality of assets 10 may be determined based on the type property. In some cases, the selection the asset from the one or more instructable assets as the target asset may be based on the location property and an alert location property associated with the alert condition. Further, selection of the asset in the plurality of assets 10 as the target asset to which an instruction associated with the alert condition is to be sent may include determining an asset in the plurality of assets 10 as a trigger asset for the alert condition based on the assets model, and setting the alert location property based on the location of the trigger asset. In some cases, selecting the asset from the one or more instructable assets as the target asset is based on the context property and an alert context property associated with the alert condition. In such cases, the method 300 may further comprise determining an asset in the plurality of assets 10 as a trigger asset for the alert condition based on the assets model and setting the alert context property based on the context of trigger asset.

Next, one or more instructions for the target asset are generated based on the one or more properties of the target asset specified in the assets model (step S308). Following this, the one or more instructions for the target asset are sent to the target assets (step S310). Where an instructions model exists for the associated alert condition, the one or more instructions may be sent in accordance with the instructions model.

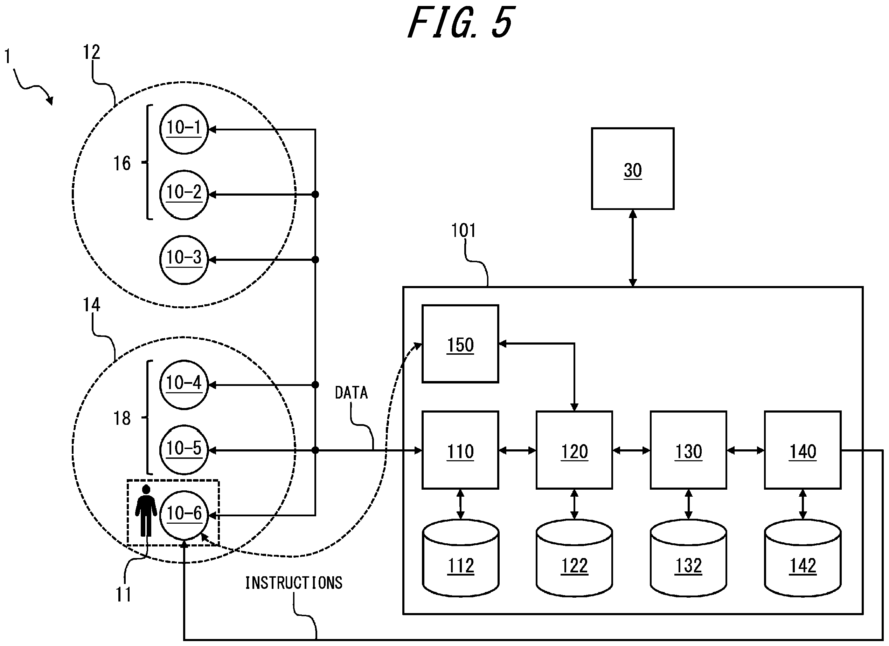

FIG. 5 is a diagram showing and enterprise 1, which is associated with a system 101 in accordance with a second embodiment of the present disclosure. According to the second embodiment, one or more assets in the plurality of connected assets 10-1 to 10-6 may be associated with a user identity corresponding to a user who is currently using the connected asset. For example, in the present embodiment, connected asset 10-6 is associated with a user identity corresponding to a user 11, who is using or is "logged on" to the connected asset 10-6. In order to track the user identities associated with the connected assets 10-1 to 10-6, the system 101 includes an identity module 150. In the present embodiment, connected asset 10-6 informs the identity module 150 that user 11 has "logged on" and is using the connected asset 10-6 by sending identity data over the network 20.

In the present embodiment, the assets model maintained by the aggregator module 120 may additionally specify the user identities of users who are associated with the plurality of connected assets 10-1 to 10-6. Thus, in the present example, the assets model may indicate that connected asset 10-6 is associated with the user identity corresponding to user 11. To facilitate this, the identity module 150 informs the aggregator module 120 of changes to the identities associated with the connected assets 10-1 to 10-6. For example, in the present embodiment, upon determining that user 11 has "logged on" to connected asset 10-6, the identity module 150 informs the aggregator module 120, which in turn updates the assets model to specify that connected asset 10-6 is associated with user 11.

According to the present embodiment, by associating the connected assets 10-1 to 10-6 with user identities in the assets model, it is possible for the instruction module 140 to select one or more target assets based on user identity. For example, where a particular alert condition, upon satisfaction, requires that a notification instruction is sent to a particular user, as defined in the resulting alert model, the instruction module 140 may, by reference to the assets model, select a connected device from the plurality of connected assets 10-1 to 10-6 which is currently associated with the particular user (i.e. a connected device to which the user is currently "logged in" to). In this manner, the system 100 can ensure that an instruction to be sent to a particular user is sent to a connected asset with which the user is currently associated.

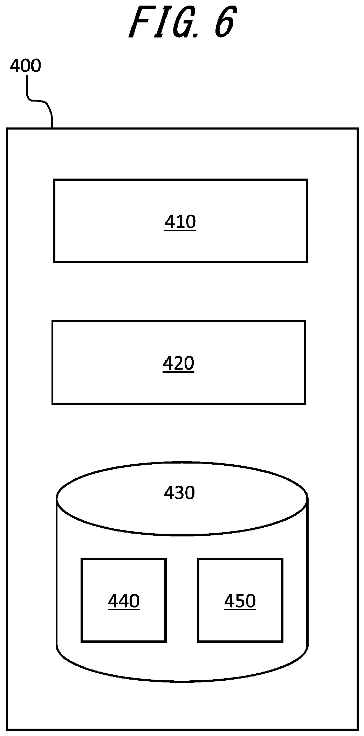

FIG.6 is schematic diagram showing a system 400 for use with the first and second embodiments of the present disclosure. In some examples, the system 400 is a server system comprising one or more servers. In other embodiments, the system 400 may be a virtualised system, such as a "cloud" system, in which functionality associated with the system 400 is provided by one or more virtual machines. The system 400 comprises one or more processors 410, a communication interface 420, and a storage system 430 (i.e. a non-transitory data storage medium). The one or processors 410 may include a central processing unit (CPU). The one or more processors 410 may be associated with volatile storage (not shown), such as random-access memory. The communication interface 420 facilitates communication between the system 400 and the plurality of assets 10 via the network 20 shown in FIG. 1 and FIG. 2. The communication interface 420 may be a network interface, such as a local area network (LAN) interface. The storage system 430 comprises one or more storage devices which store asset data 440 such as the assets model of the first and second embodiments discussed above. The one or more storage devices may include an electro-mechanical data storage device, a solid-state data storage device, or a combination thereof.

The device module 110, the aggregator module 120, the alert module 130, the instruction module 140, and/or the identity module 150, described above in relation to the first and second embodiments, may be realized in software, hardware, or a combination thereof. For example, in the system 400 shown FIG. 6, the storage system 430 may store a program 450 which defines one or more instructions which, when executed by the one or more processors 410, realize one or more of the device module 110, the aggregator module 120, the alert module 130, the instruction module 140, and the identity module 150 of the first and second embodiments discussed above. More specifically, the program 450 may define one or more instructions which, when executed by the one or more processors 410, cause the system 400 to perform the method 300 described above with reference to FIG. 4.

The network 20 described above with reference to the first and second embodiments may include one or more of a LAN, a wireless local area network (WLAN) and/or a wide area network (WLAN). The network 20 may employ various communication standards, such as Wi-Fi™, Bluetooth™ and/or a cellular radio standards, such as Global System for Mobile Communications (GSM), Universal Mobile Telecommunications System (UMTS), Code Division Multiple Access (CDMA), Long Term Evolution (LTE), or the like.

The above embodiments are to be understood as illustrative examples of the present disclosure and further embodiments are envisaged. It is to be understood that any feature described in relation to any one embodiment may be used alone, or in combination with other features described, and may also be used in combination with one or more features of any other of the embodiments. Furthermore, equivalents and modifications not described above may also be employed without departing from the scope defined in the accompanying claims.

## Claims

1. A method for generating an instruction, the method comprising:
updating an asset database based on data received from a plurality of assets, the asset database storing asset data specifying an assets model, the assets model specifying one or more asset properties for each asset in the plurality of assets;
determining whether an alert condition is satisfied based on a sensor property specified by the assets model;
selecting an asset in the plurality of assets as a target asset to which an instruction associated with the alert condition is to be sent, based on a location property specified by the assets model; and
generating an instruction for the target asset based on the one or more properties for the target asset specified in the assets model.

2. The method of claim 1, wherein selecting the asset in the plurality of assets as the target asset comprises:
determining one or more instructable assets in the plurality of assets based on the assets model; and
selecting the target asset from the one or more instructable assets based on the one or more asset properties for each of the one or more instructable assets.

3. The method of claim 2, wherein:
the one or more asset properties include a status property; and
determining the one or more instructable assets in the plurality of assets is based on the status property.

4. The method of claim 2, wherein:
the one or more asset properties include a type property; and
determining the one or more instructable assets in the plurality of assets is based on the type property.

5. The method of any one of claims 1 to 4, wherein selecting the asset from the one or more instructable assets as the target asset is based on the location property and an alert location property associated with the alert condition.

6. The method of claim 5, further comprising:
determining an asset in the plurality of assets as a trigger asset for the alert condition based on the assets model; and
setting the alert location property based on a location of the trigger asset.

7. The method of any one of claims 1 to 4, wherein the one or more asset properties for the first asset include a context property, and selecting the asset from the one or more instructable assets as the target asset is based on the context property and an alert context property associated with the alert condition.

8. The method of claim 7, further comprising:
determining an asset in the plurality of assets as a trigger asset for the alert condition based on the assets model; and
setting the alert context property based on a context of the trigger asset.

9. A system for generating an instruction, the system comprising one or more processors configured to:
update an asset database based on data received from a plurality of assets, the asset database storing asset data specifying an assets models, the assets model specifying one or more asset properties for each asset in the plurality of assets;
determine whether an alert condition is satisfied based on a sensor property specified by the assets model;
select an asset in the plurality of assets as a target asset to which an instruction associated with the alert condition is to be sent, based on a location property specified by the assets model; and
generate an instruction for the target asset based on the one or more properties for the target asset specified in the assets model.

10. A non-transitory computer readable medium storing one or more instructions which, when executed by one or more processors, implement a method for generating an instruction, the method comprising:
updating an asset database based on data received from a plurality of assets, the asset database storing asset data specifying an assets model, the assets model specifying one or more asset properties for each asset in the plurality of assets;
determining whether an alert condition is satisfied based on a sensor property specified by the assets model;
selecting an asset in the plurality of assets as a target asset to which an instruction associated with the alert condition is to be sent, based on a location property specified by the assets model; and
generating an instruction for the target asset based on the one or more properties for the target asset specified in the assets model.
